# EUROPEAN PATENT SPECIFICATION

(11) **EP 3 825 035 B1**
(45) Date of publication and mention of the grant of the patent: **27.09.2023**
(21) Application number: 19837734.3
(22) Date of filing: 15.07.2019
(51) Int. Cl.: B22D 18/04, B22D 19/00, B22D 35/04, B22D 41/015, B22D 39/00

(54) **METHOD FOR CASTING ALUMINUM IN ROTOR**
VERFAHREN ZUM GIESSEN VON ALUMINIUM IN EINEM ROTOR
PROCÉDÉ DE COULAGE D'ALUMINIUM DANS UN ROTOR

(30) Priority: 20.07.2018 CN 201810801154
(43) Date of publication of application: 26.05.2021
(73) Proprietor: Fujian Puhui Technology Development Co., Ltd, Fuan, Fujian 355000 (CN); Hou, Jibo, Fuan, Fujian 355000 (CN); Zhen, Hongbin, Fuan, Fujian 355000 (CN)
(72) Inventor: SHI, Songling, Fuan, Fujian 355000 (CN); HOU, Jibo, Fuan, Fujian 355000 (CN); ZHEN, Hongbin, Fuan, Fujian 355000 (CN)
(74) Representative: Murgitroyd & Company
(86) International application number: PCT/CN2019/095995
(87) International publication number: WO 2020/015608

(56) References cited:
- CN-A- 1 122 065
- CN-A- 101 847 913
- CN-A- 103 658 599
- CN-A- 107 511 469
- CN-A- 109 202 040
- CN-U- 206 597 892
- DE-C1- 3 831 802
- JP-A- H07 213 031
- JP-A- S55 122 660
- JP-A- 2011 016 166

## Description

### Technical Field

The present invention relates to the technical field of casting aluminum on motor rotors, and in particular to a method for casting aluminum on rotor.

### Background Art

The rotor consists of an upper short circuit ring, a lower short circuit ring, a guide bar connected between the upper short circuit ring and the lower short circuit ring and a rotor iron core; the upper short circuit ring, the lower short circuit ring and the guide bars are collectively referred to as a squirrel cage, and the squirrel cage is cast by adopting a method for casting aluminum on rotor.

At present, the method for casting aluminum on rotor commonly used in the market is pressure casting, which is essentially a method of filling the die cavity with liquid or semi-liquid metal at a higher speed under high pressure, and forming and solidifying under pressure to obtain castings. The pressure casting has the characteristics of fast filling and high efficiency; however, it is well known that the rotor aluminum castings produced therefrom have many defects such as pores and shrinkage holes, which cause the resistance of the squirrel cage to increase and the efficiency of the motor to decrease.

Low pressure casting uses lower pressures than pressure casting and is therefore named. The product quality of low-pressure casting is obviously improved compared with that of pressure casting, but due to the fact that the gas pressure mode is adopted for casting filling, the casting still has the defects of air holes, shrinkage holes and cold shuts in the condensation process. CN1122065A discloses a low-pressure casting method of a squirrel-cage rotor, wherein the method heats and assembles a die in three times to realize directional solidification of aluminum, which is beneficial to feeding and effectively improves the quality of the cast aluminum rotor. However, the production efficiency is affected by heating and disassembling in three times.

JP2011016166A and JPS55122660A disclose a method for casting aluminium on rotor using a plurality of dies.

### Summary of the Invention

The purpose of the present invention is to overcome the above-mentioned problems in the prior art and provide a method for rotor casting aluminum, which improves casting efficiency by reasonably allocating heating time and one-time multiple pouring; and through top-down temperature gradient and precise pressure control cooperates to improve the feeding capacity.

In order to achieve the above objectives of the present invention, the following technical solutions are provided:
A method for casting aluminum on a rotor, comprising: installing casting equipment on a casting workbench and storing molten aluminum in the casting equipment, wherein the casting equipment comprises a heat preserving furnace configured to store molten aluminum and an electromagnetic pump arranged at a side of the heat preserving furnace ; assembling a plurality of rotor iron cores with a plurality of dies respectively and preheating outside the casting workbench, the preheating being performed by induction heating, resistance heating, direct contact direct current resistance heating or gas heating; installing the plurality of preheated dies on a plurality of liquid outlet gates at a top end of the electromagnetic pump, wherein each liquid outlet gate is matched with a liquid inlet gate of the dies; heating and keeping the installed die in a multi-stage heating mode by sheathing a four-section heating coil outside the die, and setting heating temperatures of the top-down arranged four-section heating coil to 400°C, 450°C, 500°C and 550°C; wherein the heating coil of adjacent sections are arranged in close proximity, and the height of the die is matched with the height of the four-section heating coil; controlling the pressurizing pressure of the electromagnetic pump in a time-period when the electromagnetic pump is used for casting; and after completing casting, moving the plurality of dies out of the casting workbench to be cooled.

Preferably, the liquid outlet of the electromagnetic pump is provided with a liquid container used for storing and insulating the aluminum liquid pumped into the electromagnetic pump; wherein the liquid container is provided with a liquid inlet matched with the liquid outlet of the electromagnetic pump at a bottom end, and the plurality of liquid outlet gates at the top end.

Preferably, a plurality of the four-section heating coils are installed on a support frame by a lifting mechanism, the support frame being installed around the electromagnetic pump; and wherein, before the installed die is heated and kept, the lifting mechanism is controlled to drive the four-section heating coil to move downwards to enable the four-section heating coil to be sheathed outside the die.

Preferably, the rotor iron core is pressed by a pressing device before the installed die is heated and kept.

Preferably, the pressing device is installed on the support frame and located above the four-section heating coil, the pressing device having an ejector pin for pressing the rotor iron core. Preferably, the controlling the pressurizing pressure of the electromagnetic pump in the time period comprises: dividing a total casting time of the electromagnetic pump evenly into multiple periods, and setting a pressurizing pressure and maintaining the pressure in each period; wherein, the pressurization pressure in the initial period is minimum, the pressurization pressure in the end period is maximum, and pressurization is performed for one cycle every two intermediate periods.

Preferably, the pressurization pressure for the initial period of time is 0.1 Pa, the pressurization pressure for the termination period of time is 0.25 Pa, and the pressurization pressure of the two intermediate periods is 0.2 Pa and 0.15 Pa respectively.

Preferably, the preheating temperature is 300-600°C.

Preferably, an electric heating device is installed in the liquid container.

The beneficial effects of the present invention are embodied in the following aspects:
1) According to the invention, the die is assembled and preheated, as well as cooled and disassembled outside the casting workbench, and the die is heated and kept on the casting workbench, greatly reducing the time occupied by assembly and preheating as well as cooling and disassembly, and improving casting production efficiency;
2) a liquid container with a plurality of liquid outlet gates is arranged at a liquid outlet of the electromagnetic pump, so that a plurality of dies can be simultaneously cast, realizing one-time multi-casting, and greatly improving production efficiency;
3) according to the present invention, by setting the top-down heating temperature gradient on the die, and making the lower part temperature higher than the upper part temperature, it is beneficial to fill the entire cavity with molten aluminum entering the die cavity from bottom to top, and achieve a top-down sequential solidification, which is beneficial for sequential feeding while purifying the purity of aluminum; and
4) according to the present invention, by utilizing the characteristic that the pressure of the direct-current electromagnetic pump is accurately controllable, when aluminum liquid is sequentially solidified, the pressure is accurately controlled in time period to achieve the purpose of feeding and exhausting, and to improve the quality of cast aluminum.

### Brief Description of the Drawings

Fig. 1 is a schematic diagram of the structure of a device for implementing the method for casting aluminum on rotor of the present invention;
Fig. 2 is a schematic view showing the assembly of a rotor iron core and a die according to the present invention; and
Fig. 3 is a schematic illustration of the assembly of a liquid outlet container with a die in one embodiment of the present invention.

Description of Reference Numerals: 1-heat preserving furnace; 2-electromagnetic pump; 20-liquid container; 20a-liquid inlet; 20b-liquid outlet gate; 3-support frame; 4-pressing device; 5-die; 5a-liquid inlet gate; 501-lower die; 502-dummy shaft; 503-upper die; 504-rotor iron core; and 6-heating coil.

### Detailed Description of the Invention

The invention provides a method for casting aluminum on a rotor, which is suitable for all products of cast-aluminum rotor motors, and is especially suitable for casting slender rotors.

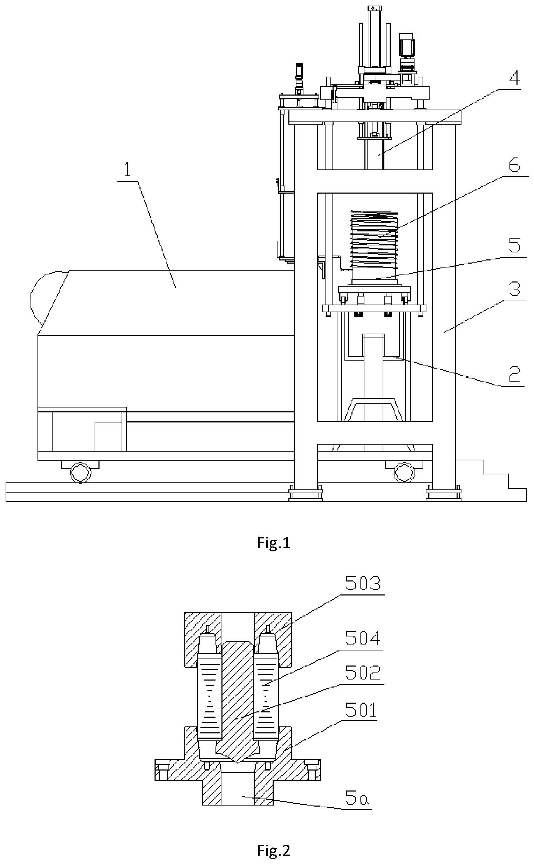

The present invention provides a method for casting aluminum through a rotor and equipment for implementing the method. As shown in Fig. 1, equipment for implementing the method includes: casting equipment arranged on a casting workbench, wherein the casting equipment includes an heat preserving furnace 1 and an electromagnetic pump 2 arranged on a side of the heat preserving furnace 1; a support frame 3 installed around the electromagnetic pump 2; a plurality of pressing devices 4 and a plurality of four-section heating coils 6 installed on the support frame 3 respectively correspond to a plurality of dies 5 to be cast. The four-section heating coil 6 is installed on the support frame 3 through a lifting mechanism, and the pressing device 4 is installed above the four-section heating coil 6.

The method for casting aluminum on the rotor provided by the present invention includes the following steps: storing enough molten aluminum in the heat preserving furnace 1 and the electromagnetic pump 2; assembling a plurality of rotor iron cores with the plurality of dies 5 respectively and preheating outside a casting workbench; installing the plurality of preheated dies 5 at a top end of the electromagnetic pump 2; heating and insulating the installed die 5 in a multi-stage heating mode; controlling the electromagnetic pump to cast, and continuously adjusting the pressure; and moving the plurality of dies 5 out of the casting workbench to be cooled and disassembled.

Wherein, the assembling and preheating of rotor iron core and die 5, as well as cooling and disassembling of the die are performed outside the casting workbench, and heating and insulating of the die 5 are performed on the casting workbench, greatly reducing the time occupied by assembly and preheating as well as cooling and disassembly, and improving casting production efficiency.

The present invention will now be described in detail with reference to the accompanying drawings and examples.

As shown in Fig. 2, the die 5 includes: a lower die 501 having a liquid inlet gate 5a for installing at a lower end of the rotor iron core 504; an upper die 503 for installing on an upper end of the rotor iron core 504; a dummy shaft 502 installed in the center of the rotor iron core 504.

After the lower die 501, the upper die 503, and the dummy shaft 502 are assembled with the rotor iron core 504, the die 5 is preheated at a preheating temperature of 300-600°C for more than 20 minutes. The preheating is performed by induction heating, resistance heating, direct contact direct current resistance heating or gas heating. Due to the fact that the preheating time is relatively long, the die is assembled and preheated outside the casting workbench in advance, which greatly shortening the heating time on the casting workbench, and improving the casting production efficiency.

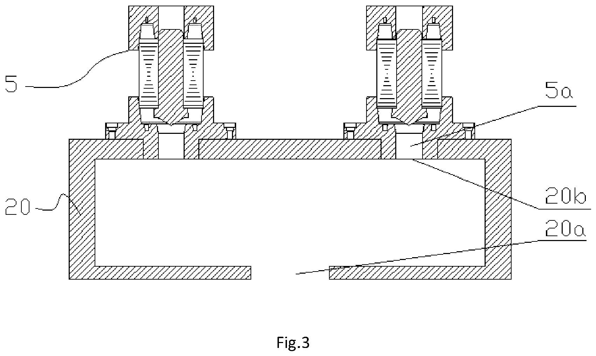

When preheated to a suitable temperature, the die 5 is installed on top of the electromagnetic pump 2. As shown in Fig. 3, a liquid outlet of the electromagnetic pump 2 (not shown) is provided with a liquid outlet container 20. The liquid outlet container 20 is provided with a liquid inlet 20a matched with the liquid outlet of the electromagnetic pump 2 at a bottom end, and the plurality of liquid outlet gates 20b at the top end at the same level. Each liquid outlet gate 20b is matched with the liquid inlet gate 5a of the die. This embodiment shows two liquid outlet gates 20b, and two dies can be cast simultaneously. The number of the liquid outlet gates 20b can be set according to the die to be cast, thereby realizing one-time multi-casting, and greatly improving the production efficiency.

The liquid outlet container 20 is internally provided with an electric heating device for storing and heating the aluminum liquid pumped thereto by the electromagnetic pump 2, wherein the temperature of the aluminum liquid is 700-720°C. The electrical heating device may be a resistance heating device.

After the die 5 is installed at the top end of the electromagnetic pump 2, the lifting mechanism is controlled to drive the four-section heating coil 6 to move downwards, so that the four-section heating coil 6 is sheathed outside the die 5; and the compressing device 4 is controlled to compress the rotor iron core. Specifically, heating coils 6 of adjacent sections of the four-section heating coil 6 are arranged next to each other, and are driven by the lifting mechanism to move downwards simultaneously. Preferably, the height of the die 5 is matched to the height of the four-section heating coil 6 sheathed on the outside thereof in order to achieve heating and insulation of the different top-down sections of the die.

Preferably, the pressing device 4 of the embodiment is installed at the top of the support frame 3, the pressing device 4 can be a pneumatic cylinder or a hydraulic cylinder. The ejector pin of the pneumatic cylinder or the hydraulic cylinder is used for pressing the lamination of the rotor iron core, thereby guaranteeing the compactness of the lamination of the rotor iron core, and avoiding looseness and aluminum leakage in the aluminum casting process.

After the lamination of the rotor iron core is compacted, the die is heated and insulated by using four-section heating coil 6. Since there is a temperature loss during the transfer of the die after pre-heating to the casting workbench, this example heats the die for 5 seconds before casting to meet the casting temperature requirement. In practice, the heating coil 6 employs an intermediate frequency induction heating coil, and the heating temperatures of the top-down arranged four-section heating coil 6 are respectively set to 400°C, 450°C, 500°C and 550°C. Here, the heating coil 6 is divided into several sections that can be set according to the rotor height. Due to the fact that the die is preheated outside the casting workbench in advance, the heating time on the casting workbench is greatly shortened, and the casting production efficiency is improved. It should be noted that the specific heating time before casting varies depending on the size and shape of the rotor, and whether the heating temperature meets the requirements can be obtained by a temperature monitoring device such as a temperature sensor.

And when the die reaches the set temperature, the electromagnetic pump is controlled to start casting. During the casting process, the top-down heating temperature of the die is always kept constant, that is, 400°C, 450°C, 500°C and 550°C, by real-time control of the temperature. Through constant temperature control, cold shuts caused by heat dissipation of the rotor in the casting process can be avoided. In addition, according to the present invention, by setting the top-down heating temperature gradient on the die, and making the lower part temperature higher than the upper part temperature, it is beneficial to fill the entire cavity with molten aluminum entering the die cavity from bottom to top, and achieve a top-down sequential solidification, which is beneficial for sequential feeding while purifying the purity of aluminum.

The electromagnetic pump of the present invention is preferably a DC electromagnetic pump. The DC electromagnetic pump uses the electromagnetic force as the conveying pressure of the aluminum liquid. Under the condition that the magnetic induction intensity is determined, the electromagnetic force and the electrode current have a strict linear relationship, so that the pressure can be accurately controlled by changing the current.

In this embodiment, when the molten aluminum is solidified sequentially, the feeding is realized by precisely controlling the pressure.

Specifically, during casting, the total casting time is divided into multiple time periods, and the pressurization and pressure maintaining of the electromagnetic pump are accurately controlled in each time period, thereby realizing feeding. The pressurization pressure in the initial period is the minimum, the pressurization pressure in the end period is the maximum, and the pressurization is performed for one cycle every two intermediate periods, so that it is beneficial for the molten aluminum to fill the entire cavity and achieve the purpose of exhaust and feeding.

In this embodiment, the rotor height is 400; the total casting time of 12 s is divided into 6 periods, and every 2 s is one period. Specifically, according to the embodiment, the pressurization and pressure maintaining of the electromagnetic pump per period are set as follows: 0.1 Pa-2 s, 0.2 Pa-2 s, 0.15 Pa-2 s, 0.2 Pa-2 s, 0.15 Pa-2 s, and 0.25 Pa-2 s. During the sequential solidification of the molten aluminum, this embodiment precisely controls the pressurization and pressure maintaining of the electromagnetic pump to enhance the feeding capability and achieve the purpose of sequential feeding.

After the casting is completed, the pressing device 4 and the four-section heating coil 6 is controlled to move upward, and then the die is moved out of the casting workbench to continue the next round of casting. And the die moved out of the casting workbench is cooled and disassembled. In order to accelerate cooling, a water-cooling mode can be adopted for the dummy shaft, so that the dummy shaft can be taken out quickly.

In order to prolong the life of the parts (lower die 501, upper die 503, dummy shaft 502 and liquid outlet container 20) that are in contact with aluminum liquid, and avoid corrosion from aluminum and wear, the parts adopt high temperature resistant steel and treated with surface coating. The high-temperature resistant steel can be metal materials such as heat-resistant steel and cast iron, and the coating is made of a material which is non-wetting with aluminum, corrosion-resistant and high-hardness, such as metal compounds SiC, SiN, WC, AlN, CrN, and ternary or quaternary compounds. The coating method can be PVD, ion spraying and other technologies.

The equipment for implementing the method further comprises a control system for controlling the pressure and the temperature; and up and down movement of the pressing device 4 and the heating coil 6, the start and stop of the heating coil 6, the start and stop of the electromagnetic pump and the like.

Although the present invention has been described in detail above, the present invention is not limited to this. Those skilled in the art can make modifications based on the principles of the present invention, which scope of protection is defined in the appended claims.

Therefore, all modifications made in accordance with the principles of the present invention should be understood as falling into the scope of the present invention.

## Claims

1. A method for casting aluminum on rotor, comprising: installing casting equipment on a casting workbench and storing molten aluminum in the casting equipment, wherein the casting equipment comprises a heat preserving furnace configured to store molten aluminum and an electromagnetic pump arranged at a side of the heat preserving furnace, **characterized in that** the method further comprises:
assembling a plurality of rotor iron cores with a plurality of dies respectively and preheating outside the casting workbench, the preheating being performed by induction heating, resistance heating, direct contact direct current resistance heating or gas heating;
installing the plurality of preheated dies on a plurality of liquid outlet gates at a top end of the electromagnetic pump, wherein each liquid outlet gate is matched with a liquid inlet gate of the dies;
heating and keeping the installed die in a multi-stage heating mode by sheathing a four-section heating coil outside the die, and setting heating temperatures of the top-down arranged four-section heating coil to 400°C, 450°C, 500°C and 550°C;
wherein the heating coil of adjacent sections are arranged in close proximity, and the height of the die is matched with the height of the four-section heating coil;
controlling the pressurizing pressure of the electromagnetic pump in a time period when the electromagnetic pump is used for casting; and
after completing casting, moving the plurality of dies out of the casting workbench to be cooled.

2. The method for casting aluminum on rotor according to claim 1, wherein a liquid outlet of the electromagnetic pump is provided with a liquid container for storing and keeping the aluminum liquid pumped into the electromagnetic pump; and wherein
the liquid container is provided with a liquid inlet matched with the liquid outlet of the electromagnetic pump at a bottom end, and the plurality of liquid outlet gates at the top end.

3. The method for casting aluminum on rotor according to claim 1, wherein a plurality of the four-section heating coils are installed on a support frame by a lifting mechanism, the support frame being installed around the electromagnetic pump; and
wherein before the installed die is heated and kept, the lifting mechanism is controlled to drive the four-section heating coil to move downwards to enable the four-section heating coil to be sheathed outside the die.

4. The method for casting aluminum on rotor according to claim 3, wherein the rotor iron core is pressed by a pressing device before the installed die is heated and held.

5. The method for casting aluminum on rotor according to claim 4, wherein the pressing device is installed on the support frame and located above the four-section heating coil, the pressing device having an ejector pin for pressing the rotor iron core.

6. The method for casting aluminum on rotor according to claim 5, wherein controlling the pressurizing pressure of the electromagnetic pump in the time period comprises: dividing a total casting time of the electromagnetic pump evenly into multiple periods, and setting a pressurizing pressure and maintaining the pressure in each period; wherein,
the pressurization pressure in the initial period is minimum, the pressurization pressure in the end period is maximum, and pressurization is performed for one cycle every two intermediate periods.

7. The method for casting aluminum on rotor according to claim 6, wherein the pressurization pressure for the initial period of time is 0.1 Pa, the pressurization pressure for the termination period of time is 0.25 Pa, and the pressurization pressure of the two intermediate periods is 0.2 Pa and 0.15 Pa respectively.

8. The method for casting aluminum on rotor according to claim 1, wherein the preheating temperature is 300-600°C.

9. The method for casting aluminum on rotor according to claim 2, wherein an electric heating device is installed in the liquid container.

## Patentansprüche

1. Ein Verfahren zum Gießen von Aluminium auf einen Rotor, beinhaltend: Installieren einer Gießanlage auf einer Gießwerkbank und Lagern von geschmolzenem Aluminium in der Gießanlage, wobei die Gießanlage einen Wärmeerhaltungsofen, der zum Lagern von geschmolzenen Aluminium konfiguriert ist, und eine elektromagnetische Pumpe, die an einer Seite des Wärmeerhaltungsofens eingerichtet ist, beinhaltet, **dadurch gekennzeichnet, dass** das Verfahren ferner Folgendes beinhaltet:
Zusammenbauen einer Vielzahl von Rotoreisenkernen mit jeweils einer Vielzahl von Formen und Vorwärmen außerhalb der Gießwerkbank, wobei das Vorwärmen durch Induktionserwärmung, Widerstandserwärmung, Direktkontakt-Gleichstrom-Widerstandserwärmung oder Gaserwärmung durchgeführt wird;
Installieren der Vielzahl von vorgewärmten Formen auf einer Vielzahl von Flüssigkeitsauslassöffnungen an einem oberen Ende der elektromagnetischen Pumpe, wobei jede Flüssigkeitsauslassöffnung mit einer Flüssigkeitseinlassöffnung der Formen zusammenpasst;
Erwärmen und Halten der installierten Form in einem mehrstufigen Erwärmungsmodus durch Ummanteln der Außenseite der Form mit einer vierteiligen Heizwicklung und Einstellen der Heiztemperaturen der von oben nach unten eingerichteten vierteiligen Heizwicklung auf 400 °C, 450 °C, 500 °C und 550 °C;
wobei die Heizwicklung benachbarter Teilabschnitte in nächster Nähe eingerichtet ist und die Höhe der Form mit der Höhe der vierteiligen Heizwicklung zusammenpasst;
Steuern des Druckbeaufschlagungsdrucks der elektromagnetischen Pumpe in einer Zeitperiode, wenn die elektromagnetische Pumpe zum Gießen verwendet wird; und
nach dem Beenden des Gießens, Bewegen der Vielzahl von Formen aus der Gießwerkbank heraus zum Abkühlen.

2. Verfahren zum Gießen von Aluminium auf einen Rotor gemäß Anspruch 1, wobei ein Flüssigkeitsauslass der elektromagnetischen Pumpe mit einem Flüssigkeitsbehälter zum Lagern und Halten der in die elektromagnetische Pumpe gepumpten Aluminiumflüssigkeit versehen ist; und wobei
der Flüssigkeitsbehälter mit einem Flüssigkeitseinlass, der mit dem Flüssigkeitsauslass der elektromagnetischen Pumpe an einem unteren Ende zusammenpasst, und der Vielzahl von Flüssigkeitsauslassöffnungen an dem oberen Ende versehen ist.

3. Verfahren zum Gießen von Aluminium auf einen Rotor gemäß Anspruch 1, wobei eine Vielzahl der vierteiligen Heizwicklungen durch einen Hebemechanismus auf einem Stützrahmen installiert ist, wobei der Stützrahmen um die elektromagnetische Pumpe herum installiert ist; und
wobei vor dem Erwärmen und Halten der installierten Form der Hebemechanismus gesteuert wird, um die vierteilige Heizwicklung anzutreiben, um sich nach unten zu bewegen, um zu ermöglichen, dass die Außenseite der Form mit der vierteiligen Heizwicklung ummantelt wird.

4. Verfahren zum Gießen von Aluminium auf einen Rotor gemäß Anspruch 3, wobei der Rotoreisenkern durch eine Pressvorrichtung gepresst wird, bevor die installierte Form erwärmt und festgehalten wird.

5. Verfahren zum Gießen von Aluminium auf einen Rotor gemäß Anspruch 4, wobei die Pressvorrichtung auf dem Stützrahmen installiert ist und sich über der vierteiligen Heizwicklung befindet, wobei die Pressvorrichtung einen Ausstoßstift zum Pressen des Rotoreisenkerns aufweist.

6. Verfahren zum Gießen von Aluminium auf einen Rotor gemäß Anspruch 5, wobei das Steuern des Druckbeaufschlagungsdrucks der elektromagnetischen Pumpe in der Zeitperiode Folgendes beinhaltet: gleichmäßiges Aufteilen einer Gesamtgießzeit der elektromagnetischen Pumpe in mehrere Perioden und Einstellen eines Druckbeaufschlagungsdrucks und Aufrechterhalten des Drucks in jeder Periode; wobei der Druckaufbaudruck in der Anfangsperiode minimal ist, der Druckaufbaudruck in der Endperiode maximal ist und der Druckaufbau alle zwei Zwischenperioden für einen Zyklus durchgeführt wird.

7. Verfahren zum Gießen von Aluminium auf einen Rotor gemäß Anspruch 6, wobei der Druckaufbaudruck für die Anfangszeitperiode 0,1 Pa beträgt, der Druckaufbaudruck für die Abschlusszeitperiode 0,25 Pa beträgt und der Druckaufbaudruck der zwei Zwischenperioden 0,2 Pa bzw. 0,15 Pa beträgt.

8. Verfahren zum Gießen von Aluminium auf einen Rotor gemäß Anspruch 1, wobei die Vorwärmtemperatur 300-600 °C beträgt.

9. Verfahren zum Gießen von Aluminium auf einen Rotor gemäß Anspruch 2, wobei eine elektrische Heizvorrichtung in dem Flüssigkeitsbehälter installiert ist.

## Revendications

1. Un procédé pour couler de l'aluminium sur un rotor, comprenant : le fait d'installer un équipement de coulage sur un établi de coulage et de stocker de l'aluminium fondu dans l'équipement de coulage, l'équipement de coulage comprenant un four à préservation de chaleur configuré pour stocker de l'aluminium fondu et une pompe électromagnétique agencée au niveau d'un côté du four à préservation de chaleur, **caractérisé en ce que** le procédé comprend en outre :
le fait d'assembler une pluralité de noyaux en fer de rotor avec une pluralité de matrices respectivement et le fait d'effectuer un préchauffage à l'extérieur de l'établi de coulage, le préchauffage étant réalisé par chauffage par induction, chauffage par résistance, chauffage par résistance en courant continu en contact direct ou chauffage par gaz ;
le fait d'installer la pluralité de matrices préchauffées sur une pluralité de portes de sortie de liquide au niveau d'une extrémité de dessus de la pompe électromagnétique, chaque porte de sortie de liquide ayant une correspondance avec une porte d'entrée de liquide des matrices ;
le fait de chauffer et de maintenir la matrice installée dans un mode de chauffage multi-étage par gainage d'un enroulement chauffant à quatre sections à l'extérieur de la matrice, et le fait de définir des températures de chauffage de l'enroulement chauffant à quatre sections agencées du haut vers le bas sur 400 °C, 450 °C, 500 °C et 550 °C ;
dans lequel l'enroulement chauffant de sections adjacentes est agencé selon une proximité étroite, et la hauteur de la matrice a une correspondance avec la hauteur de l'enroulement chauffant à quatre sections ;
le fait de commander la pression de pressurisation de la pompe électromagnétique dans un laps de temps lorsque la pompe électromagnétique est utilisée pour le coulage ; et
après que le coulage est fini, le fait de déplacer la pluralité de matrices hors de l'établi de coulage afin qu'elles refroidissent.

2. Le procédé pour couler de l'aluminium sur un rotor selon la revendication 1, dans lequel une sortie de liquide de la pompe électromagnétique est pourvue d'un récipient pour liquide destiné à stocker et à maintenir l'aluminium liquide pompé dans la pompe électromagnétique ; et dans lequel
le récipient pour liquide est pourvu d'une entrée de liquide auquel correspond une sortie de liquide de la pompe électromagnétique au niveau d'une extrémité de fond, et de la pluralité de portes de sortie de liquide au niveau de l'extrémité de dessus.

3. Le procédé pour couler de l'aluminium sur un rotor selon la revendication 1, dans lequel une pluralité des enroulements chauffants à quatre sections sont installés sur un cadre de support par un mécanisme de levage, le cadre de support étant installé autour de la pompe électromagnétique ; et
dans lequel avant que la matrice installée ne soit chauffée et maintenue, le mécanisme de levage est commandé afin d'entraîner l'enroulement chauffant à quatre sections à se déplacer vers le bas pour permettre à l'enroulement chauffant à quatre sections d'être gainé à l'extérieur de la matrice.

4. Le procédé pour couler de l'aluminium sur un rotor selon la revendication 3, dans lequel le noyau en fer de rotor est pressé par un dispositif de pressage avant que la matrice installée ne soit chauffée et maintenue.

5. Le procédé pour couler de l'aluminium sur un rotor selon la revendication 4, dans lequel le dispositif de pressage est installé sur le cadre de support et situé au-dessus de l'enroulement chauffant à quatre sections, le dispositif de pressage ayant une broche d'éjecteur pour presser le noyau en fer de rotor.

6. Le procédé pour couler de l'aluminium sur un rotor selon la revendication 5, dans lequel le fait de commander la pression de pressurisation de la pompe électromagnétique dans le laps de temps comprend : le fait de diviser un temps de coulage total de la pompe électromagnétique de manière égale en périodes multiples, et le fait de définir une pression de pressurisation et de conserver la pression dans chaque période ; dans lequel,
la pression de pressurisation dans la période initiale est minimale, la pression de pressurisation dans la période finale est maximale, et la pressurisation est effectuée pendant un cycle toutes les deux périodes intermédiaires.

7. Le procédé pour couler de l'aluminium sur un rotor selon la revendication 6, dans lequel la pression de pressurisation pour le laps de temps initial est de 0,1 Pa, la pression de pressurisation pour le laps de temps de terminaison est de 0,25 Pa, et la pression de pressurisation des deux périodes intermédiaires est de 0,2 Pa et 0,15 Pa respectivement.

8. Le procédé pour couler de l'aluminium sur un rotor selon la revendication 1, dans lequel la température de préchauffage est de 300 à 600 °C.

9. Le procédé pour couler de l'aluminium sur un rotor selon la revendication 2, dans lequel un dispositif de chauffage électrique est installé dans le récipient de liquide.
